(19) Europäisches Patentamt / European Patent Office / Office européen des brevets

(11) **EP 4 682 126 A1**

(12) **EUROPEAN PATENT APPLICATION**
published in accordance with Art. 153(4) EPC

(43) Date of publication:
**21.01.2026 Bulletin 2026/04**

(21) Application number: **24779476.1**

(22) Date of filing: **13.03.2024**

(51) International Patent Classification (IPC):
*C04B 7/345* (2006.01)    *C04B 7/02* (2006.01)
*C04B 14/10* (2006.01)    *C04B 14/26* (2006.01)
*C04B 22/10* (2006.01)    *C04B 28/00* (2006.01)
*C04B 28/02* (2006.01)

(52) Cooperative Patent Classification (CPC):
**C04B 22/10; C04B 7/02; C04B 7/345; C04B 14/10;
C04B 14/26; C04B 28/00; C04B 28/02**

(86) International application number:
**PCT/JP2024/009831**

(87) International publication number:
**WO 2024/203347 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 30.03.2023  JP 2023055311
30.03.2023  JP 2023055450
30.03.2023  JP 2023055330

(71) Applicant: **Mitsubishi UBE Cement Corporation
Tokyo 100-8521 (JP)**

(72) Inventors:
• **FUKUSHIMA, Yuta
Tokyo 100-8521 (JP)**
• **ITOH, Takayasu
Tokyo 100-8521 (JP)**
• **OSAKI, Masashi
Tokyo 100-8521 (JP)**
• **SAITO, Tsuyoshi
Niigata-shi, Niigata 950-2181 (JP)**

(74) Representative: **Hoffmann Eitle
Patent- und Rechtsanwälte PartmbB
Arabellastraße 30
81925 München (DE)**

(54) **HYDRAULIC COMPOSITION, CURED BODY, AND METHOD FOR PRODUCING HYDRAULIC COMPOSITION**

(57)    A hydraulic composition contains a calcined inorganic mineral and an alkaline activator, the hydraulic composition containing the calcined inorganic mineral in an amount of 10 to 90 mass% and the alkaline activator in an amount of 90 to 10 mass% based on the total amount of the calcined inorganic mineral and the alkaline activator. The calcined inorganic mineral is characterized in that: its mass ratio $SiO_2/Al_2O_3$ is 0.5 to 3.0 and the BET specific surface area is 30 to 180 $m^2/g$; it is a calcined product of an inorganic mineral that has a mass ratio of trivalent iron ions to divalent iron ions ($Fe^{3+}/Fe^{2+}$) of 2.0 to 6.0 as determined by absorptiometry, and its mass ratio $SiO_2/Al_2O_3$ is 0.5 to 3.0; or its mass ratio $SiO_2/Al_2O_3$ is 0.5 to 3.0 and the b value in the Lab color space is 5.0 to 17.0.

EP 4 682 126 A1

**Description**

**Technical Field**

The present invention relates to a hydraulic composition, a hardened body, and a method for producing a hydraulic composition.

**Background Art**

As a technique of calcining an inorganic mineral to enhance the reactivity and using the calcined material instead of a cement admixture such as blast furnace slag or fly ash, LC[3] (Limestone Calcined Clay Cement) has been known (for example, Non Patent Literature 1). This cement can be referred to as a low-carbon cement, and is capable of reducing carbon dioxide emissions ($CO_2$) associated with its production, compared to ordinary Portland cement.

**Citation List**

**Non Patent Literature**

Non Patent Literature 1: Karen Scrivener et al.: Calcined clay limestone cements (LC3), Cement and Concrete Research, Vol. 114, pp. 49-56 (2018)

**Summary of Invention**

**Technical Problem**

Incidentally, regarding the above-described technique, it has been demonstrated that good strength development is achieved for a material containing metakaolin obtained by calcining kaolin as an inorganic mineral. However, since the regions and countries where kaolin is produced are limited, it is an issue to search for a material to replace kaolin.

The present invention has been made in view of the above circumstances, and an object thereof is to provide a low-carbon hydraulic composition that is produced using an inorganic mineral other than kaolin and has sufficient compressive strength development. Another object of the present invention is to provide a hardened body obtained from the hydraulic composition, and a method for producing the hydraulic composition.

**Solution to Problem**

As a material other than kaolin, the inventors have focused on minerals such as allophane, which are generally said to inhibit the reaction of cement. Then, the inventors have found that there is a possibility that the hydraulic composition containing such a mineral has properties equivalent to or better than those in the case containing kaolin, and there is a possibility that the blending amount of cement as an alkaline activator in the preparation of the hydraulic composition can be reduced, thereby completing the present invention.

One aspect of the present invention is as follows [1] to [14].

[1] A hydraulic composition (first hydraulic composition) containing: a calcined inorganic mineral having a mass ratio of $SiO_2$ to $Al_2O_3$ ($SiO_2/Al_2O_3$) of 0.5 to 3.0 and the BET specific surface area of 30 to 180 $m^2/g$; and an alkaline activator, in which the hydraulic composition contains the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

[2] A hydraulic composition (second hydraulic composition) containing: a calcined inorganic mineral obtained by calcining an inorganic mineral having a mass ratio of trivalent iron ions to divalent iron ions ($Fe^{3+}/Fe^{2+}$) of 2.0 to 6.0 as determined by absorptiometry, the calcined inorganic mineral having a mass ratio of $SiO_2$ to $Al_2O_3$ ($SiO_2/Al_2O_3$) of 0.5 to 3.0; and an alkaline activator, in which the hydraulic composition contains the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

[3] A hydraulic composition (third hydraulic composition) containing: a calcined inorganic mineral having a mass ratio of $SiO_2$ to $Al_2O_3$ ($SiO_2/Al_2O_3$) of 0.5 to 3.0 and the b value in the Lab color space of 5.0 to 17.0; and an alkaline activator, in which the hydraulic composition contains the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

[4] The hydraulic composition according to [1] to [3], in which the hydraulic composition further contains a carbonate, and a mass ratio of the carbonate to a mass of the calcined inorganic mineral (carbonate/calcined inorganic mineral) is 2.0 or less.

[5] The hydraulic composition according to [1] to [4], in which the calcined inorganic mineral is a clay mineral calcined at 500°C to 950°C.

[6] The hydraulic composition according to any one of [1] to [5], in which the alkaline activator contains Portland cement.

[7] The hydraulic composition according to any one of [1] to [6], in which the calcined inorganic mineral contains calcined allophane or calcined halloysite.

[8] The hydraulic composition according to [7], in which the content of the calcined allophane or the calcined halloysite in the calcined inorganic mineral is 60 mass% or more.

[9] A hardened body formed by hardening a paste containing the hydraulic composition according to any one of [1] to [8] and water.

[10] A method for producing a hydraulic composition (first method for producing a hydraulic composition) including: a preparation step of mixing a calcined inorganic mineral having a mass ratio of $SiO_2$ to $Al_2O_3$ ($SiO_2/Al_2O_3$) of 0.5 to 3.0 and the BET specific surface area of 30 to 180 $m^2/g$ with an alkaline activator, to prepare a hydraulic composition containing the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

[11] A method for producing a hydraulic composition (second method for producing a hydraulic composition) including: a preparation step of mixing, with an alkaline activator, a calcined inorganic mineral obtained by calcining an inorganic mineral having a mass ratio of trivalent iron ions to divalent iron ions ($Fe^{3+}/Fe^{2+}$) of 2.0 to 6.0 as determined by absorptiometry, the calcined inorganic mineral having a mass ratio of $SiO_2$ to $Al_2O_3$ ($SiO_2/Al_2O_3$) of 0.5 to 3.0, to prepare a hydraulic composition containing the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

[12] A method for producing a hydraulic composition (third method for producing a hydraulic composition) including: a preparation step of mixing a calcined inorganic mineral having a mass ratio of $SiO_2$ to $Al_2O_3$ ($SiO_2/Al_2O_3$) of 0.5 to 3.0 and the b value in the Lab color space of 5.0 to 17.0 with an alkaline activator, to prepare a hydraulic composition containing the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

[13] The production method according to any one of [10] to [12], further including, prior to the preparation step, a calcining step of calcining an inorganic mineral at 500°C to 950°C to obtain the calcined inorganic mineral.

[14] The production method according to [13], in which the inorganic mineral is a clay mineral.

## Advantageous Effects of Invention

According to the present invention, it is possible to provide a low-carbon hydraulic composition that is produced using an inorganic mineral other than kaolin and has sufficient compressive strength development. Furthermore, according to the present invention, it is possible to provide the hardened body obtained from the hydraulic composition, and the method for producing the hydraulic composition.

## Description of Embodiments

Hereinafter, suitable embodiments of the present disclosure will be described in detail. However, the present disclosure is not limited to the following embodiments.

In a case where in the following description, "X to Y" (X and Y are optional numeric values) means "X or more and Y or less" unless otherwise specified.

The materials exemplified in the present specification can be used alone or in combination of two or more unless otherwise specified. The content of each component in a composition means the total amount of a plurality of substances present in the composition, unless otherwise specified in cases where a plurality of substances is used to correspond to individual components in the composition.

<Hydraulic Composition>

A first hydraulic composition contains a calcined inorganic mineral having a mass ratio of $SiO_2$ to $Al_2O_3$

($SiO_2/Al_2O_3$) of 0.5 to 3.0 or less and the BET specific surface area of 30 to 180 $m^2/g$, and an alkaline activator.

The content of the calcined inorganic mineral is 10 to 90 mass%, and the content of the alkaline activator is 90 to 10 mass%, based on the total amount (100 mass%) of the calcined inorganic mineral and the alkaline activator.

A second hydraulic composition contains a calcined inorganic mineral that is obtained by calcining an inorganic mineral having a mass ratio of trivalent iron ions to divalent iron ions ($Fe^{3+}/Fe^{2+}$) of 2.0 to 6.0 as determined by absorptiometry, and that has a mass ratio of $SiO_2$ to $Al_2O_3$ ($SiO_2/Al_2O_3$) of 0.5 to 3.0 or less, and an alkaline activator.

The content of the calcined inorganic mineral is 10 to 90 mass%, and the content of the alkaline activator is 90 to 10 mass%, based on the total amount (100 mass%) of the calcined inorganic mineral and the alkaline activator.

A third hydraulic composition contains a calcined inorganic mineral having a mass ratio of $SiO_2$ to $Al_2O_3$ ($SiO_2/Al_2O_3$) of 0.5 to 3.0 or less and the b value in the Lab color space of 5.0 to 17.0, and an alkaline activator.

The content of the calcined inorganic mineral is 10 to 90 mass%, and the content of the alkaline activator is 90 to 10 mass%, based on the total amount (100 mass%) of the calcined inorganic mineral and the alkaline activator.

(Calcined Inorganic Mineral)

The calcined inorganic mineral is obtained by calcining an inorganic mineral at a predetermined temperature. Calcining causes an increase in the compressive strength of the inorganic mineral, but calcining does not cause substantial changes in the contents of $SiO_2$ and $Al_2O_3$, the mass ratio $SiO_2/Al_2O_3$, and the like of the inorganic mineral.

Examples of the inorganic mineral (provided that kaolin is excluded) in which the mass ratio $SiO_2/Al_2O_3$ is 0.5 to 3.0 include allophane, halloysite, imogolite, illite, montmorillonite, and pyrophyllite. Among these, from the viewpoint of reactivity with the alkaline activator, the inorganic mineral preferably contains allophane or halloysite, and more preferably contains allophane. That is, the calcined inorganic mineral (provided that metakaolin is excluded) preferably contains calcined allophane or calcined halloysite, and more preferably contains calcined allophane.

From the viewpoint of easily exhibiting sufficient compressive strength, the content of calcined allophane or calcined halloysite in the calcined inorganic mineral (also, which can be referred to as the content of allophane or halloysite in the inorganic mineral) is preferably 60 mass% or more, more preferably 80 mass% or more, and may be 100 mass% (a calcined inorganic mineral substantially composed of calcined allophane or calcined halloysite).

The content of allophane in the inorganic mineral or calcined allophane in the calcined inorganic mineral can be determined by an acid-alkali alternate dissolution method, and the content of halloysite in the inorganic mineral or calcined halloysite in the calcined inorganic mineral can be determined by XRD Rietveld analysis.

The inorganic mineral may be a mineral produced by weathering of volcanic ejecta, that is, a mineral derived from volcanic ejecta. Examples of the volcanic ejecta include volcanic ash, volcanic lapilli, pumice, and pyroclastic flow deposits. The inorganic mineral may also be a mineral produced by weathering of igneous rocks. Examples of the igneous rocks include granite and the like. Generally, allophane is produced by weathering of volcanic ejecta or igneous rocks, halloysite is produced by further weathering of allophane, and kaolin is produced by further weathering of halloysite. These kaolin, allophane, and halloysite are clay minerals.

Allophane is an amorphous inorganic mineral. Allophane generally has a particle diameter of 0.05 to 0.2 $\mu m$ and the BET specific surface area of 250 to 600 $m^2/g$.

Halloysite is a crystalline inorganic mineral. Halloysite generally has a particle diameter of 0.1 to 0.3 $\mu m$ and the BET specific surface area of 40 to 100 $m^2/g$.

In a case where the mass ratio $SiO_2/Al_2O_3$ is within the above-described range, the reactivity between the calcined inorganic mineral and the alkaline activator is likely improved. From this viewpoint, the mass ratio $SiO_2/Al_2O_3$ is 0.5 or more, and is preferably 0.6 or more, and more preferably 0.7 or more. In addition, the mass ratio $SiO_2/Al_2O_3$ is 3.0 or less, and is preferably 2.5 or less, and more preferably 2.3 or less.

The content of $SiO_2$ in the inorganic mineral is preferably 30 mass% or more and preferably 55 mass% or less from the viewpoint of reactivity with the alkaline activator.

The content of $Al_2O_3$ in the inorganic mineral is preferably 20 mass% or more and preferably 60 mass% or less from the viewpoint of reactivity with the alkaline activator.

In the first hydraulic composition, when the BET specific surface area is within the above-described range, the calcined inorganic mineral and the alkaline activator readily react with each other. From this viewpoint, the BET specific surface area is 30 $m^2/g$ or more, and is preferably 35 $m^2/g$ or more, and more preferably 40 $m^2/g$ or more. In addition, the BET specific surface area is 180 $m^2/g$ or less, and is preferably 160 $m^2/g$ or less, and more preferably 140 $m^2/g$ or less.

The BET specific surface area is measured by a nitrogen gas adsorption method.

In the second hydraulic composition, when a mass ratio $Fe^{3+}/Fe^{2+}$ of trivalent iron ions to divalent iron ions in the inorganic mineral as determined by absorptiometry is within the above-described range, the calcined inorganic mineral as the calcined product and the alkaline activator easily react with each other. From this viewpoint, the mass ratio $Fe^{3+}/Fe^{2+}$ is 2.0 or more. In addition, the mass ratio $Fe^{3+}/Fe^{2+}$ is 6.0 or less, and is preferably 5.7 or less and more preferably 5.5 or less.

From the viewpoint of the content of the clay mineral contained in the inorganic mineral, the content of the trivalent

iron ions $Fe^{3+}$ in the inorganic mineral as determined by absorptiometry can be 0.5 mass% or more, and is preferably 0.55 mass% or more and more preferably 0.6 mass% or more. In addition, the content of $Fe^{3+}$ can be 2.0 mass% or less, and is preferably 1.9 mass% or less and more preferably 1.8 mass% or less, from the viewpoint that the content of the clay mineral contained in the inorganic mineral decreases as the amount of an Fe compound adsorbed onto a surface of the clay mineral increases.

From the viewpoint of the content of the clay mineral contained in the inorganic mineral, the content of the divalent iron ions $Fe^{2+}$ in the inorganic mineral as determined by absorptiometry can be 0.13 mass% or more, and is preferably 0.14 mass% or more and more preferably 0.15 mass% or more. In addition, the content of $Fe^{2+}$ can be 0.8 mass% or less, and is preferably 0.7 mass% or less and more preferably 0.6 mass% or less, from the viewpoint that the content of the clay mineral contained in the inorganic mineral decreases as the amount of an Fe compound adsorbed onto a surface of the clay mineral increases.

The mass ratio $Fe^{3+}/Fe^{2+}$ is calculated by dividing the amount (mass%) of the trivalent iron ions $Fe^{3+}$ by the amount (mass%) of the divalent iron ions $Fe^{2+}$, based on the total amount of the inorganic compound, both of which are determined by absorptiometry.

In the third hydraulic composition, it is presumed that the degree of reactivity of the calcined inorganic mineral having a mass ratio ($SiO_2/Al_2O_3$) of 0.5 to 3.0 can be identified by focusing on the b value in the Lab color space. When the b value in the Lab color space is within the above-described range, the calcined inorganic mineral and the alkaline activator easily react with each other. From this viewpoint, the b value is 5.0 or more, and is preferably 5.5 or more and more preferably 6.0 or more. From the same viewpoint, the b value can be 17.0 or less, and is preferably 16.0 or less and more preferably 15.0 or less.

When the a value in the Lab color space is from 0.5 to 20.0, a sufficient amount of the clay mineral is present in the inorganic mineral, which facilitates an improvement in reactivity with the alkaline activator upon calcination. From this viewpoint, the a value is preferably 0.5 or more and more preferably 1.0 or more. From the same viewpoint, the a value is preferably 20.0 or less, and more preferably 15.0 or less.

When the L value in the Lab color space is from 50.0 to 94.0, a sufficient amount of the clay minerals is present in the inorganic mineral, which facilitates an improvement in reactivity with the alkaline activator upon calcination. From this viewpoint, the L value is preferably 50.0 or more and more preferably 60.0 or more. From the same viewpoint, the L value is preferably 94.0 or less and more preferably 90.0 or less.

The L value, a value, and b value in the Lab color space are calculated in the Hunter 1948 (Lab color space) color space.

When the content of the calcined inorganic mineral is the above-described lower limit value or more based on the total amount of the calcined inorganic mineral and the alkaline activator, good compressive strength can be obtained, and when the content is the above-described upper limit value or less, good fluidity can be maintained. From these viewpoints, the content is 10 mass% or more, and is preferably 20 mass% or more and more preferably 30 mass% or more. In addition, the content is 90 mass% or less, and is preferably 80 mass% or less and more preferably 70 mass% or less.

The calcined inorganic mineral is obtained by calcining the inorganic mineral at a predetermined temperature as described above, and the fact that the inorganic mineral has been calcined can be confirmed by analysis using $^{27}Al$-NMR. Specifically, in the calcined inorganic mineral, when the sum of peak areas of 4-coordinated Al, 5-coordinated Al, and 6-coordinated Al analyzed by $^{27}Al$-NMR is 100%, the ratio of a peak area of at least one of 4-coordinated Al and 5-coordinated Al is 30% to 50%.

It is considered that, in the calcined inorganic mineral, the 4-coordinated Al and the 5-coordinated Al have unstable frameworks, which contributes to an increase in reactivity with the alkaline activator. When the percentage of the peak area of at least one of the 4-coordinated Al and 5-coordinated Al is 30% or more, the effect of this action can be sufficiently obtained. On the other hand, when the percentages of the 4-coordinated Al and 5-coordinated Al are too large, the reaction with the alkaline activator may rapidly proceed. When the percentage of the peak area of at least one of the 4-coordinated Al and 5-coordinated Al is 50% or less, such a phenomenon is easily suppressed. From these viewpoints, the percentage of the peak area of at least one of the 4-coordinated Al and 5-coordinated Al is preferably 30% to 45%, and more preferably 35% to 45%.

From the viewpoint of easily obtaining the above-described action and effect, the percentage of the peak area of each of the 4-coordinated Al and the 5-coordinated Al may be 30% to 50%, and, for each, is preferably 30% to 45% and more preferably 35% to 45%.

The sum of the peak areas of the 4-coordinated Al and the 5-coordinated Al is preferably 50% or more from the viewpoint of reactivity with the alkaline activator, and is preferably 90% or less from the viewpoint of the reaction rate with the alkaline activator. From these viewpoints, the sum of the peak areas of the 4-coordinated Al and the 5-coordinated Al is more preferably 60% to 90%, and still more preferably 70% to 80%.

From the above, the peak area of the 6-coordinated Al is preferably 10% to 50%, more preferably 10% to 40%, and still more preferably 20% to 30%.

In order for the inorganic mineral to have the desired peak areas of the 4-coordinated Al, the 5-coordinated Al, and the 6-coordinated Al, the inorganic mineral may be calcined at a predetermined temperature, and more specifically, the inorganic mineral may be calcined according to the content described in a calcining step described later.

The percentage of the peak area is measured as follows.

The chemical shifts and coordination states of the nuclide $^{27}$Al-NMR of the calcined inorganic mineral are analyzed using an NMR apparatus, JNM-ECZ800R (manufactured by JEOL Ltd.).

Analysis method is the MAS (Magic Angle Spinning) method, and a 3.2 mm sample tube is used. The analysis conditions are as follows: a magnetic field strength of 18.79 T; a frequency of 20 kHz; the number of accumulations of 256; and a pulse width of 90° (0.6 μs).

Deconvolution of peaks is performed on the obtained $^{27}$Al-NMR spectrum by using the Voigt function, which is a convolution function of the Gaussian function and the Lorentzian function. Then, each peak area is calculated using the integral value of each peak obtained after the deconvolution.

In the $^{27}$Al-NMR spectrum of the calcined inorganic mineral, a peak P1 is observed in a chemical shift range of -10 ppm to 15 ppm, a peak P2 is observed in a chemical shift range of 50 ppm to 80 ppm, and a peak P3 is observed in a chemical shift range of 30 ppm to 40 ppm. The peak P1 corresponds to the 6-coordinated Al, which is derived from the framework of the inorganic mineral. The peaks P2 and P3 are derived from the 4-coordinated Al and the 5-coordinated Al, respectively, which are considered to be generated by partial collapse of the framework of the inorganic mineral, and the like (for example, by heat treatment at a high temperature, the 6-coordinated Al structure is decomposed, and dehydroxylation is caused).

From the obtained peak areas of P1 to P3, the sum of the areas of P1 + P2 + P3 and the percentages of the areas of P2 and P3 based on the sum are calculated.

(Alkaline Activator)

Examples of the alkaline activator include Portland cement clinker, Portland cement, tricalcium silicate (3CaO·SiO$_2$, denoted as C$_3$S), and hydrated lime.

As the Portland cement clinker, a Portland cement clinker used for preparing various types of Portland cement specified in JIS R 5210:2003 "Portland Cement" can be used. Examples of the various types of Portland cement include ordinary Portland cement, high early strength Portland cement, moderate heat Portland cement, and low heat Portland cement. The Portland cement clinker may be a Portland cement clinker used for preparing ordinary Portland cement and high early strength Portland cement.

The mineral composition of the Portland cement clinker can be calculated by the Bogue equation. Here, the Bogue equation is an equation widely used as an equation for calculating the content of main minerals in Portland cement clinker from the content ratio of chemical compositions. The content of tricalcium silicate (3CaO·SiO$_2$, denoted as C$_3$S), dicalcium silicate (2CaO·SiO$_2$, denoted as C$_2$S), and tricalcium aluminate (3CaO·Al$_2$O$_3$, denoted as C$_3$A) in Portland cement clinker can be calculated by using the Bogue equation shown below. In the following equations, "%" means "mass%".

The chemical formula represents the content ratio (mass%) of each compound indicated by the chemical analysis value according to JIS R 5204:2019 "Chemical analysis method of cement by X-ray fluorescence".

$$<\text{Bogue Equation}>$$

$$C_3S[\%] = (4.07 \times CaO[\%]) - (7.60 \times SiO_2[\%]) - (6.72 \times Al_2O_3[\%]) - (1.43 \times Fe_2O_3[\%]) - (2.85 \times SO_3[\%])$$

$$C_2S[\%] = (2.87 \times SiO_2[\%]) - (0.754 \times C_3S[\%])$$

$$C_3A[\%] = (2.65 \times Al_2O_3[\%]) - (1.69 \times Fe_2O_3[\%])$$

$$C_4AF[\%] = 3.04 \times Fe_2O_3[\%]$$

The Portland cement may be ordinary Portland cement, high early strength Portland cement, ultra-high early strength Portland cement, medium heat Portland cement, low heat Portland cement, or sulphate resistant Portland cement.

When the content of the alkaline activator is the above-described lower limit value or more based on the total amount of the calcined inorganic mineral and the alkaline activator, good compressive strength can be obtained, and when the content is the above-described upper limit value or less, a reduction in CO$_2$ emissions can be achieved. From these viewpoints, the content is 10 mass% or more, and is preferably 20 mass% or more and more preferably 30 mass% or more. In addition, the content is 90 mass% or less, and is preferably 80 mass% or less and more preferably 70 mass% or less.

The total amount (content) of the calcined inorganic mineral and the alkaline activator in the hydraulic composition is preferably 75 mass% or more, preferably 80 mass% or more, more preferably 85 mass% or more, and may be 100 mass% (the hydraulic composition is substantially composed of the calcined inorganic mineral and the alkaline activator) based on the total amount of the hydraulic composition, from the viewpoint of compressive strength.

(Carbonate)

The hydraulic composition may contain a carbonate.

Examples of the carbonate include a carbonate of an alkaline earth metal added to the hydraulic composition for the purpose of promoting a hydration reaction between the alkaline activator and the calcined inorganic mineral, and examples thereof include calcium carbonate (limestone) and magnesium carbonate.

In addition, as the carbonate, a carbonate of an alkaline metal such as sodium carbonate 10-hydrate ($Na_2CO_3 \cdot 10H_2O$), sodium carbonate ($Na_2CO_3$), potassium carbonate ($K_2CO_3$), or sodium sesquicarbonate dihydrate ($Na_3H(CO_3)_2 \cdot NaHCO_3 \cdot 2H_2O$) that reacts, as the alkaline activator, with the inorganic mineral can also be used.

As the limestone, for example, generally commercially available limestone powder and powder containing calcium carbonate as a main component such as limestone powder or Kan-sui-seki powder (white limestone powder) can be used. The limestone preferably contains those that comply with a small-amount mixing component described in JIS R 5210:2009 "Portland cement".

From the viewpoint of fluidity, the content of the carbonate in the hydraulic composition is 0 mass% or more, preferably more than 0 mass%, and may be 10 mass% or more, based on the total amount of the hydraulic composition. On the other hand, from the viewpoint of compressive strength, the content of the carbonate in the hydraulic composition is preferably 25 mass% or less, may be 20 mass% or less, and may be 15 mass% or less.

In addition, the mass ratio of the carbonate to the mass of the calcined inorganic mineral (carbonate/calcined inorganic mineral) in the hydraulic composition is preferably 2.0 or less and more preferably 1.0 or less from the viewpoint of compressive strength. The lower limit of the mass ratio is not particularly limited, and can be 0.

(Other Components)

The hydraulic composition may contain an inorganic fine powder, gypsum, and the like in addition to the calcined inorganic mineral, the alkaline activator, and the carbonate. In a case where the hydraulic composition contains these other components in addition to the carbonate, the total amount (content) of the carbonate and the other components can be 25 mass% or less, may be 20 mass% or less, and may be 15 mass% or less based on the total amount of the hydraulic composition.

The inorganic fine powder is added to the hydraulic composition for the purpose of improving the compressive strength. Examples of the inorganic fine powder include powdery materials such as silica stone and crushed stone.

From the viewpoint of fluidity, the content of the inorganic fine powder in the hydraulic composition is 0 mass% or more, and preferably more than 0 mass% based on the total amount of the hydraulic composition. From the viewpoint of compressive strength, the content of the inorganic fine powder in the hydraulic composition is preferably 15 mass% or less.

The gypsum is added to the hydraulic composition for the purpose of adjusting the hydration reaction rate. Examples of the gypsum include dihydrate gypsum, hemihydrate gypsum, and anhydrous gypsum.

The content of gypsum in the hydraulic composition can be equivalent to the amount of gypsum in ordinary Portland cement, and is 0 mass% or more, and preferably more than 0 mass%, based on the total amount of the hydraulic composition. On the other hand, from the viewpoint of easily maintaining a good hydration reaction rate, the content of gypsum in the hydraulic composition is preferably 5 mass% or less.

<Hardened Body>

A hardened body is formed by hardening a paste containing the hydraulic composition described above and water. The hardening conditions are not particularly limited. The hardened body can be prepared in accordance with the method described in JIS R 5201:2015 "Physical testing methods for cement".

From the viewpoint of fluidity, the amount of water in the paste is preferably 35 parts by mass or more with respect to 100 parts by mass of the total amount of the hydraulic composition. On the other hand, from the viewpoint of easily making a void structure of the hardened body dense, the amount of water in the paste is preferably 80 parts by mass or less. From these viewpoints, the amount of water is preferably 35 to 80 parts by mass, and more preferably 50 to 70 parts by mass.

<Method for Producing Hydraulic Composition>

A first method for producing a hydraulic composition includes a preparation step of mixing a calcined inorganic mineral having a mass ratio of $SiO_2$ to $Al_2O_3$ ($SiO_2/Al_2O_3$) of 0.5 to 3.0 and the BET specific surface area of 30 to 180 $m^2/g$ with an alkaline activator, to prepare a hydraulic composition containing the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

A second method for producing a hydraulic composition includes a preparation step of mixing, with an alkaline activator, a calcined inorganic mineral obtained by calcining an inorganic mineral having a mass ratio of trivalent iron ions to divalent iron ions ($Fe^{3+}/Fe^{2+}$) of 2.0 to 6.0 as determined by absorptiometry, the calcined inorganic mineral having a mass ratio of $SiO_2$ to $Al_2O_3$ ($SiO_2/Al_2O_3$) of 0.5 to 3.0, to prepare a hydraulic composition containing the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

A third method for producing a hydraulic composition includes a preparation step of mixing a calcined inorganic mineral having a mass ratio of $SiO_2$ to $Al_2O_3$ ($SiO_2/Al_2O_3$) of 0.5 to 3.0 and the b value in the Lab color space of 5.0 to 17.0 with an alkaline activator, to prepare a hydraulic composition containing the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

The method for producing a hydraulic composition may further include, prior to the preparation step, a calcining step of calcining an inorganic mineral at 500°C to 950°C to obtain the calcined inorganic mineral. In this case, the inorganic mineral may be a clay mineral as described above.

(Preparation Step)

In a preparation step, the calcined inorganic mineral and the alkaline activator are mixed. At the time of mixing both, a carbonate and the above-mentioned other components may be mixed together. The blending amount of each raw material is as described above.

In the preparation step, each raw material may be pulverized. In a case where crushing is performed, the order of mixing and crushing is not particularly limited. That is, the raw materials may be mixed and then crushed, the raw materials may be individually crushed and then mixed, or the raw materials may be mixed and crushed simultaneously. The mixing may be performed using, for example, a mixer such as a pan-type mixer, a tilt-type mixer, or a ribbon mixer, or may be performed by mixing and pulverizing using a pulverizer such as a ball mill, a vertical roller mill, or a roller press, or may be performed by a mixer such as a mechanical mixer after each of the raw materials is pulverized.

(Calcining Step)

The calcination temperature in the calcining step is preferably 500°C or higher from the viewpoint of increasing the compressive strength of the inorganic mineral. On the other hand, from the viewpoint of suppressing the production of other minerals (for example, the production of mullite in the case of allophane), the calcination temperature in the calcining step is preferably 950°C or lower. From these viewpoints, the calcination temperature is more preferably 600°C to 900°C.

The calcination duration is not particularly limited, and can be 0.5 to 5 hours and may be 1 to 4 hours from the viewpoint of influence on the crystal structure.

The calcining step can be referred to as a step of calcining an inorganic mineral such that the percentage of a peak area of at least one of 4-coordinated Al and 5-coordinated Al is 30% to 50% when the sum of peak areas of 4-coordinated Al, 5-coordinated Al, and 6-coordinated Al analyzed by $^{27}$Al-NMR is 100%. In a case where the area of the peak P1 of 6-coordinated Al derived from the framework of the inorganic mineral is too large, sufficient compressive strength cannot be obtained. It can be said that the calcining step is a step of causing partial collapse of the framework of the inorganic mineral to generate the peaks P2 and P3 derived from the 4-coordinated Al and the 5-coordinated Al, which contribute to the improvement of the compressive strength.

## Examples

The present invention will be described in more detail by the following examples, but the present invention is not limited to these examples.

<Experiment 1: First Hydraulic Composition>

[Raw Materials of Hydraulic Composition]

(Inorganic Mineral)

The types of inorganic mineral (clay mineral) samples used are shown in Table 1. The content of the inorganic mineral in a case where the inorganic mineral is metakaolin or halloysite was measured by XRD Rietveld analysis, and the content of the inorganic mineral in a case where the inorganic mineral is allophane was measured by an acid-alkali alternate dissolution method.

[Table 1]

| Inorganic mineral sample | Sample name | Content of inorganic mineral (clay mineral) (mass%) | Calcination temperature (°C) | Chemical component | | | BET specific surface area $(m^2/g)$ | Peak area percentage (%) | | |
|---|---|---|---|---|---|---|---|---|---|---|
| | | | | Content (mass%) | | Mass ratio | | 4-coordination (P2) | 5-coordination (P3) | 6-coordination (P1) |
| | | | | $SiO_2$ | $Al_2O_3$ | $SiO_2/Al_2O_3$ | | | | |
| A | SEKADO P-1 (manufactured by Shinagawa General Co., Ltd.) | Allophane (72.5) | 900 | 45.4 | 46.3 | 1.0 | 102.0 | 44.1 | 32.2 | 23.7 |
| B | Kanuma soil (manufactured by Akagi Engei Co., Ltd.) | Allophane (63.2) | 900 | 54.6 | 36.0 | 1.5 | 47.0 | 35.0 | 40.8 | 24.2 |
| C | Satsuma soil (manufactured by Yamaichi Keiseki Co., Ltd.) | Allophane (40.4) | 900 | 49.1 | 22.1 | 2.2 | 32 | - | - | - |
| D | DRAGONITE (manufactured by FIMATEC LTD.) | Halloysite (86.8) | 800 | 50.7 | 45.6 | 1.1 | 56 | 32.6 | 44.4 | 23.0 |
| E | Andosol | **Allophane** (27.2) | 900 | 57.3 | 27.0 | 2.1 | 18 | - | - | - |
| F | polestar200R (manufactured by IMERYS S.A.) | **Metakaolin** (56.0) | - | 53.3 | 41.9 | 1.3 | 13.0 | - | - | - |
| G | Polestar450 (manufactured by IMERYS S.A.) | Metakaolin (88.4) | - | 49.8 | 45.8 | 1.1 | 21.0 | 37.5 | 46.7 | 15.7 |

(Alkaline Activator)

An ordinary Portland cement (OPC, manufactured by Mitsubishi UBE Cement Corporation) was used as an alkaline activator.

(Carbonate)

Calcium carbonate ((limestone fine powder 325 mesh product) manufactured by Ube Material Industries, Ltd.) was used as a carbonate.

[Preparation of Hydraulic Composition]

Various types of inorganic minerals were calcined at 900°C for 1 hour to obtain calcined inorganic minerals.
Next, according to the formulation shown in Table 4, a calcined inorganic mineral, an alkaline activator, and optionally a carbonate were mixed to prepare a hydraulic composition.

(Measurement of Chemical Components)

The chemical components of the calcined inorganic mineral were measured with an X-ray fluorescence analyzer (ZSX100e manufactured by Rigaku Corporation). The results are shown in Table 1.

(Method for Measuring BET Specific Surface Area)

The amount of nitrogen gas adsorbed to the calcined inorganic mineral pretreated at 105°C for 1 hour in a nitrogen gas atmosphere was measured using BELSORPMINI manufactured by MicrotracBEL Corp. Based on the results, the specific surface area was calculated. The results are shown in Table 1.

(Calculation of Peak Area Ratio)

The chemical shifts and coordination states of the nuclide $^{27}$Al-NMR of the calcined inorganic mineral were analyzed using an NMR apparatus, JNM-ECZ800R (manufactured by JEOL Ltd.).
The analysis method was the Magic Angle Spinning (MAS) method, and a 3.2 mm sample tube was used. The analysis conditions were as follows: a magnetic field strength of 18.79 T; a frequency of 20 kHz; the number of accumulations of 256; and a pulse width of 90° (0.6 $\mu$s).
Deconvolution of peaks was performed on the obtained $^{27}$Al-NMR spectrum by using the Voigt function, which is a convolution function of the Gaussian function and the Lorentzian function. In the $^{27}$Al-NMR spectrum, a peak P1 in a chemical shift range of -10 ppm to 15 ppm corresponds to 6-coordinated Al, a peak P2 in a chemical shift range of 50 ppm to 80 ppm corresponds to 4-coordinated Al, and a peak P3 in a chemical shift range of 30 ppm to 40 ppm corresponds to 5-coordinated Al.
Then, each peak area was calculated using the integral value of each peak obtained after the deconvolution.
From the obtained peak areas, the sum of the areas of P1 + P2 + P3 and the percentages (%) of the areas of P1 to P3 based on the sum were calculated. The results are shown in Table 1.

[Preparation of Hardened Body]

A hardened body was prepared by blending the prepared hydraulic composition with water and the standard sand for cement strength test specified by the Japan Cement Association, as a fine aggregate, in accordance with the method described in JIS R 5201:2015 "Physical testing methods for cement". The prepared hardened body was cured in water in a thermostatic chamber at 20°C for up to 7 and 28 days of age.

[Activity Index Measurement]

In accordance with the description of JIS R 5201:2015 "Physical testing methods for cement", the compressive strengths of the above-described hardened bodies at material ages of 7 and 28 days were measured. The activity index refers to the ratio of the compressive strength of a hardened body to be measured to the compressive strength of a reference hardened body in percentage. The reference hardened body was prepared by blending ordinary Portland cement with water and the standard sand for cement strength test specified by the Japan Cement Association, as a fine aggregate, in accordance with the method described in JIS R 5201:2015 "Physical testing methods for cement". The results are shown in Table 4.

<Experiment 2: Second Hydraulic Composition>

[Raw Materials of Hydraulic Composition]

(Inorganic Mineral)

The types of inorganic mineral (clay mineral) samples used are shown in Table 2. The content of the inorganic mineral in a case where the inorganic mineral is metakaolin or halloysite was measured by XRD Rietveld analysis, and the content of the inorganic mineral in a case where the inorganic mineral is allophane was measured by an acid-alkali alternate dissolution method.

The amount of $Fe^{2+}$, the amount of $Fe^{3+}$, and the mass ratio of $Fe^{3+}/Fe^{2+}$ in the inorganic mineral were measured and calculated by phenanthroline absorptiometry in accordance with JIS K0120:2016 "Testing methods for industrial wastewater" using an ultraviolet-visible spectrophotometer (manufactured by Hitachi High-Tech Science Corporation, product name: U-2900 type).

[Table 2]

| Inorganic mineral sample | Sample name | Content of inorganic mineral (clay mineral) (mass%) | $Fe^{2+}$ amount (mass%) $Fe^{3+}$ amount (mass%) $Fe^{3+}$ / $Fe^{2+}$ | Calcination temperature (°C) | Chemical component | | | Peak area percentage (%) | | |
|---|---|---|---|---|---|---|---|---|---|---|
| | | | | | Content (mass%) | | Mass ratio | | | |
| | | | | | $SiO_2$ | $Al_2O_3$ | $SiO_2/Al_2O_3$ | 4-coordination (P2) | 5-**coordination** (P3) | 6-coordination (P1) |
| A | SEKADO P-1 (manufactured by Shinagawa General Co., Ltd.) | Allophane (72.5) | 0.29 1.6 5.5 | 900 | 45.4 | 46.3 | 1.0 | 44.1 | 32.2 | 23.7 |
| B | Kanuma soil (manufactured by Akagi Engei Co., Ltd.) | Allophane (63.2) | 0.35 1.3 3.7 | 900 | 54.6 | 36.0 | 1.5 | 35.0 | 40.8 | 24.2 |
| C | Satsuma soil (manufactured by Yamaichi Kelseki Co., Ltd.) | Allophane (40.4) | 0.51 1.0 2.0 | 900 | 49.1 | 22.1 | 2.2 | - | - | - |
| D | DRAGONITE (manufactured by FIMATEC LTD.) | Halloysite (86.8) | 0.15 0.68 4.5 | 800 | 50.7 | 45.6 | 1.1 | 32.6 | 44.4 | 23.0 |
| E | Andosol | Allophane (27.2) | 10.1 7.5 0.7 | 900 | 57.3 | 27.0 | 2.1 | - | - | - |
| F | polestar200R (manufactured by IMERYS S.A.) | Metakaolin (56.0) | - | - | 53.3 | 41.9 | 1.3 | - | - | - |
| G | Polestar450 (manufactured by IMERYS S.A.) | Metakaolin (88.4) | - | - | 49.8 | 45.8 | 1.1 | 37.5 | 46.7 | 15.7 |

13

EP 4 682 126 A1

(Alkaline Activator)

An ordinary Portland cement (OPC, manufactured by Mitsubishi UBE Cement Corporation) was used as an alkaline activator.

(Carbonate)

Calcium carbonate ((limestone fine powder 325 mesh product) manufactured by Ube Material Industries, Ltd.) was used as a carbonate.

[Preparation of Hydraulic Composition]

Various types of inorganic minerals were calcined at 900°C for 1 hour to obtain calcined inorganic minerals.
Next, according to the formulation shown in Table 4, a calcined inorganic mineral, an alkaline activator, and optionally a carbonate were mixed to prepare a hydraulic composition.

(Measurement of Chemical Components)

The chemical components of the calcined inorganic mineral were measured with an X-ray fluorescence analyzer (ZSX100e manufactured by Rigaku Corporation). The results are shown in Table 2.

(Calculation of Peak Area Ratio)

The chemical shifts and coordination states of the nuclide $^{27}$Al-NMR of the calcined inorganic mineral were analyzed using an NMR apparatus, JNM-ECZ800R (manufactured by JEOL Ltd.).
The analysis method was the Magic Angle Spinning (MAS) method, and a 3.2 mm sample tube was used. The analysis conditions were as follows: a magnetic field strength of 18.79 T; a frequency of 20 kHz; the number of accumulations of 256; and a pulse width of 90° (0.6 μs).
Deconvolution of peaks was performed on the obtained $^{27}$Al-NMR spectrum by using the Voigt function, which is a convolution function of the Gaussian function and the Lorentzian function. In the $^{27}$Al-NMR spectrum, a peak P1 in a chemical shift range of -10 ppm to 15 ppm corresponds to 6-coordinated Al, a peak P2 in a chemical shift range of 50 ppm to 80 ppm corresponds to 4-coordinated Al, and a peak P3 in a chemical shift range of 30 ppm to 40 ppm corresponds to 5-coordinated Al.
Then, each peak area was calculated using the integral value of each peak obtained after the deconvolution.
From the obtained peak areas, the sum of the areas of P1 + P2 + P3 and the percentages (%) of the areas of P1 to P3 based on the sum were calculated. The results are shown in Table 2.

[Preparation of Hardened Body]

A hardened body was prepared by blending the prepared hydraulic composition with water and the standard sand for cement strength test specified by the Japan Cement Association, as a fine aggregate, in accordance with the method described in JIS R 5201:2015 "Physical testing methods for cement". The prepared hardened body was cured in water in a thermostatic chamber at 20°C for up to 7 and 28 days of age.

[Activity Index Measurement]

In accordance with the description of JIS R 5201:2015 "Physical testing methods for cement", the compressive strengths of the above-described hardened bodies at material ages of 7 and 28 days were measured. The activity index refers to the ratio of the compressive strength of a hardened body to be measured to the compressive strength of a reference hardened body in percentage. The reference hardened body was prepared by blending ordinary Portland cement with water and the standard sand for cement strength test specified by the Japan Cement Association, as a fine aggregate, in accordance with the method described in JIS R 5201:2015 "Physical testing methods for cement". The results are shown in Table 4.

<Experiment 3: Third Hydraulic Composition>

[Raw Materials of Hydraulic Composition]

(Inorganic Mineral)

The types of inorganic mineral (clay mineral) samples used are shown in Table 3. The content of the inorganic mineral in a case where the inorganic mineral is metakaolin or halloysite was measured by XRD Rietveld analysis, and the content of the inorganic mineral in a case where the inorganic mineral is allophane was measured by an acid-alkali alternate dissolution method.

[Table 3]

| Inorganic mineral sample | Sample name | Content of inorganic mineral (clay mineral) (mass%) | Calcination temperature (°C) | Chemical component | | | L value/a value /b value | Peak area percentage (%) | | |
|---|---|---|---|---|---|---|---|---|---|---|
| | | | | Content | (mass%) | Mass ratio | | 4-**coordination** (P2) | 5-coordination (P3) | 6-coordination (P1) |
| | | | | $SiO_2$ | $Al_2O_3$ | $SiO_2/Al_2O_3$ | | | | |
| A | SEKADO P-1 (manufactured by Shinagawa General Co., Ltd.) | Allophane (72.5) | 900 | 45.4 | 46.3 | 1.0 | 84.9/3.2/12.6 | 44.1 | 32.2 | 23.7 |
| B | Kanuma soil (manufactured by Akagi Engei Co., Ltd.) | Allophane (63.2) | 900 | 54.6 | 36.0 | 1.5 | 81.9/3.4/12.5 | 35.0 | 40.8 | 24.2 |
| C | Satsuma soil (manufactured by Yamatchi Keiseki Co., Ltd.) | Allophane (40.4) | 900 | 49.1 | 22.1 | 2.2 | 80.1/3.9/13.9 | - | - | - |
| D | DRAGONITE (manufactured by FIMATEC LTD.) | Halloysite (86.8) | 800 | 50.7 | 45.6 | 1.1 | 85.9/4.8/6.0 | 32.6 | 44.4 | 23.0 |
| E | Andosol | Allophane (27.2) | 900 | 57.3 | 27.0 | 2.1 | 49.1/21.0/17.4 | - | - | - |
| F | polestar200R (manufactured by IMERYS S.A.) | Metakaolin (56.0) | - | 53.3 | 41.9 | 1.3 | 92.7/-0.7/4.3 | - | - | - |
| G | Polestar450 (manufactured by IMERYS S.A.) | Metakaolin (88.4) | - | 49.8 | 45.8 | 1.1 | 95.1/-0.1/4.5 | 37.5 | 46.7 | 15.7 |

EP 4 682 126 A1

16

(Alkaline Activator)

An ordinary Portland cement (OPC, manufactured by Mitsubishi UBE Cement Corporation) was used as an alkaline activator.

(Carbonate)

Calcium carbonate ((limestone fine powder 325 mesh product) manufactured by Ube Material Industries, Ltd.) was used as a carbonate.

[Preparation of Hydraulic Composition]

Various types of inorganic minerals were calcined at 900°C for 1 hour to obtain calcined inorganic minerals.
Next, according to the formulation shown in Table 4, a calcined inorganic mineral, an alkaline activator, and optionally a carbonate were mixed to prepare a hydraulic composition.

(Measurement of Chemical Components)

The chemical components of the calcined inorganic mineral were measured with an X-ray fluorescence analyzer (ZSX100e manufactured by Rigaku Corporation). The results are shown in Table 3.

(Method for Measuring Each Value in Lab Color Space)

Each value in the Lab color space of the calcined inorganic mineral was measured as follows. That is, the L value, a value, and b value of the calcined inorganic mineral were measured 3 times by the method of Hunter 1946 using a colorimeter (SE7700 manufactured by Nippon Denshoku Industries Co., Ltd.), and the average value thereof was obtained. The results are shown in Table 3.

(Calculation of Peak Area Ratio)

The chemical shifts and coordination states of the nuclide $^{27}$Al-NMR of the calcined inorganic mineral were analyzed using an NMR apparatus, JNM-ECZ800R (manufactured by JEOL Ltd.).
The analysis method was the Magic Angle Spinning (MAS) method, and a 3.2 mm sample tube was used. The analysis conditions were as follows: a magnetic field strength of 18.79 T; a frequency of 20 kHz; the number of accumulations of 256; and a pulse width of 90° (0.6 $\mu$s).
Deconvolution of peaks was performed on the obtained $^{27}$Al-NMR spectrum by using the Voigt function, which is a convolution function of the Gaussian function and the Lorentzian function. In the $^{27}$Al-NMR spectrum, a peak P1 in a chemical shift range of -10 ppm to 15 ppm corresponds to 6-coordinated Al, a peak P2 in a chemical shift range of 50 ppm to 80 ppm corresponds to 4-coordinated Al, and a peak P3 in a chemical shift range of 30 ppm to 40 ppm corresponded to 5-coordinated Al.
Then, each peak area was calculated using the integral value of each peak obtained after the deconvolution.
From the obtained peak areas, the sum of the areas of P1 + P2 + P3 and the percentages (%) of the areas of P1 to P3 based on the sum were calculated. The results are shown in Table 3.

[Preparation of Hardened Body]

A hardened body was prepared by blending the prepared hydraulic composition with water and the standard sand for cement strength test specified by the Japan Cement Association, as a fine aggregate, in accordance with the method described in JIS R 5201:2015 "Physical testing methods for cement". The prepared hardened body was cured in water in a thermostatic chamber at 20°C for up to 7 and 28 days of age.

[Activity Index Measurement]

In accordance with the description of JIS R 5201:2015 "Physical testing methods for cement", the compressive strengths of the above-described hardened bodies at material ages of 7 and 28 days were measured. The activity index refers to the ratio of the compressive strength of a hardened body to be measured to the compressive strength of a reference hardened body in percentage. The reference hardened body was prepared by blending ordinary Portland cement with water and the standard sand for cement strength test specified by the Japan Cement Association, as a fine aggregate, in accordance with the method described in JIS R 5201:2015 "Physical testing methods for cement". The results are shown in Table 4.

[Table 4]

| | Inorganic mineral | Blending amount [mass%] | | | Mass ratio of carbonate / calcined inorganic mineral | Activity index | |
| --- | --- | --- | --- | --- | --- | --- | --- |
| | | Calcined inorganic mineral | Alkaline activator | Carbonate | | 7 days | 28 days |
| | | | OPC | Ca carbonate | | | |
| Example 1 | A | 50 | 50 | 0 | 0.0 | 93.9 | 94.8 |
| Example 2 | A | 35 | 50 | 15 | 0.4 | 96.3 | 95.1 |
| Example 3 | A | 30 | 50 | 20 | 0.7 | 93.9 | 94.8 |
| Example 4 | A | 25 | 50 | 25 | 1.0 | 93.6 | 80.2 |
| Example 5 | B | 10 | 90 | 0 | 0.0 | 107.9 | 109.3 |
| Example 6 | B | 30 | 70 | 0 | 0.0 | 94.3 | 97.6 |
| Example 7 | B | 24 | 70 | 6 | 0.3 | 94.5 | 96.6 |
| Example 8 | B | 21 | 70 | 9 | 0.4 | 98.1 | 98.1 |
| Example 9 | B | 50 | 50 | 0 | 0.0 | 68.8 | 80.0 |
| Example 10 | B | 35 | 50 | 15 | 0.4 | 80.8 | 85.4 |
| Example 11 | B | 30 | 50 | 20 | 0.7 | 67.9 | 69.3 |
| Example 12 | B | 25 | 50 | 25 | 1.0 | 63.9 | 65.8 |
| Example 13 | B | 70 | 30 | 0 | 0.0 | 42.1 | 53.3 |
| Example 14 | C | 50 | 50 | 0 | 0.0 | 39.9 | 50.6 |
| Example 15 | C | 35 | 50 | 15 | 0.4 | 42.4 | 51.0 |
| Example 16 | D | 50 | 50 | 0 | 0.0 | 96.9 | 93.4 |
| Example 17 | D | 35 | 50 | 15 | 0.4 | 98.2 | 92.1 |
| Comparative Example 1 | E | 50 | 50 | 0 | 0.0 | 32.4 | 49.3 |
| Comparative Example 2 | E | 35 | 50 | 15 | 0.4 | 31.0 | 44.7 |
| Reference Example 1 | F | 50 | 50 | 0 | 0.0 | 51.0 | 65.1 |
| Reference Example 2 | F | 35 | 50 | 15 | 0.4 | 45.3 | 59.1 |
| Reference Example 3 | G | 50 | 50 | 0 | 0.0 | 89.8 | 105.8 |
| Reference Example 4 | G | 35 | 50 | 15 | 0.4 | 92.9 | 94.9 |

## Claims

1. A hydraulic composition comprising: a calcined inorganic mineral having a mass ratio of $SiO_2$ to $Al_2O_3$ ($SiO_2/Al_2O_3$) of 0.5 to 3.0 and a BET specific surface area of 30 to 180 $m^2/g$; and an alkaline activator, wherein the hydraulic composition comprises the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

2. A hydraulic composition comprising: a calcined inorganic mineral obtained by calcining an inorganic mineral having a mass ratio of trivalent iron ions to divalent iron ions ($Fe^{3+}/Fe^{2+}$) of 2.0 to 6.0 as determined by absorptiometry, the calcined inorganic mineral having a mass ratio of $SiO_2$ to $Al_2O_3$ ($SiO_2/Al_2O_3$) of 0.5 to 3.0; and an alkaline activator, wherein the hydraulic composition comprises the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

3. A hydraulic composition comprising: a calcined inorganic mineral having a mass ratio of $SiO_2$ to $Al_2O_3$ ($SiO_2/Al_2O_3$) of 0.5 to 3.0 and a b value in a Lab color space of 5.0 to 17.0; and an alkaline activator, wherein the hydraulic composition comprises the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

4. The hydraulic composition according to any one of claims 1 to 3, wherein the hydraulic composition further comprises a carbonate, and a mass ratio of the carbonate to a mass of the calcined inorganic mineral (carbonate/calcined inorganic mineral) is 2.0 or less.

5. The hydraulic composition according to any one of claims 1 to 4, wherein the calcined inorganic mineral is a clay mineral calcined at 500°C to 950°C.

6. The hydraulic composition according to any one of claims 1 to 5, wherein the alkaline activator comprises Portland cement.

7. The hydraulic composition according to any one of claims 1 to 6, wherein the calcined inorganic mineral comprises calcined allophane or calcined halloysite.

8. The hydraulic composition according to claim 7, wherein a content of the calcined allophane or the calcined halloysite in the calcined inorganic mineral is 60 mass% or more.

9. A hardened body formed by hardening a paste comprising the hydraulic composition according to any one of claims 1 to 8 and water.

10. A method for producing a hydraulic composition comprising: a preparation step of mixing a calcined inorganic mineral having a mass ratio of $SiO_2$ to $Al_2O_3$ ($SiO_2/Al_2O_3$) of 0.5 to 3.0 and a BET specific surface area of 30 to 180 $m^2$/g with an alkaline activator, to prepare a hydraulic composition comprising the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

11. A method for producing a hydraulic composition comprising: a preparation step of mixing, with an alkaline activator, a calcined inorganic mineral obtained by calcining an inorganic mineral having a mass ratio of trivalent iron ions to divalent iron ions ($Fe^{3+}/Fe^{2+}$) of 2.0 to 6.0 as determined by absorptiometry, the calcined inorganic mineral having a mass ratio of $SiO_2$ to $Al_2O_3$ ($SiO_2/Al_2O_3$) of 0.5 to 3.0, to prepare a hydraulic composition comprising the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

12. A method for producing a hydraulic composition comprising: a preparation step of mixing a calcined inorganic mineral having a mass ratio of $SiO_2$ to $Al_2O_3$ ($SiO_2/Al_2O_3$) of 0.5 to 3.0 and a b value in a Lab color space of 5.0 to 17.0 with an alkaline activator, to prepare a hydraulic composition comprising the calcined inorganic mineral in an amount of 10 to 90 mass% based on a total amount of the calcined inorganic mineral and the alkaline activator, and the alkaline activator in an amount of 90 to 10 mass% based on the total amount of the calcined inorganic mineral and the alkaline activator.

13. The production method according to any one of claims 10 to 12, further comprising, prior to the preparation step, a calcining step of calcining an inorganic mineral at 500°C to 950°C to obtain the calcined inorganic mineral.

14. The production method according to claim 13, wherein the inorganic mineral is a clay mineral.

## INTERNATIONAL SEARCH REPORT

| International application No. |
| --- |
| **PCT/JP2024/009831** |

### A.    CLASSIFICATION OF SUBJECT MATTER

*C04B 7/345*(2006.01)i; *C04B 7/02*(2006.01)i; *C04B 14/10*(2006.01)i; *C04B 14/26*(2006.01)i; *C04B 22/10*(2006.01)i;
*C04B 28/00*(2006.01)i; *C04B 28/02*(2006.01)i
FI:    C04B7/345; C04B7/02; C04B14/10 A; C04B14/10 Z; C04B14/26; C04B28/00; C04B22/10; C04B28/02; C04B14/10 B

According to International Patent Classification (IPC) or to both national classification and IPC

### B.    FIELDS SEARCHED

Minimum documentation searched (classification system followed by classification symbols)

C04B7/345; C04B7/02; C04B14/10; C04B14/26; C04B22/10; C04B28/00; C04B28/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C.    DOCUMENTS CONSIDERED TO BE RELEVANT

| Category* | Citation of document, with indication, where appropriate, of the relevant passages | Relevant to claim No. |
| --- | --- | --- |
| A | JP 2003-128450 A (KAJIMA CORPORATION) 08 May 2003 (2003-05-08)<br>entire text, all drawings | 1-14 |
| A | JP 3-265549 A (TAKENAKA CORPORATION) 26 November 1991 (1991-11-26)<br>entire text, all drawings | 1-14 |
| A | JP 2001-302296 A (TAIHEIYO CEMENT CORPORATION) 31 October 2001 (2001-10-31)<br>entire text | 1-14 |
| P, X | JP 2023-127724 A (MITSUBISHI UBE CEMENT CORP.) 14 September 2023 (2023-09-14)<br>paragraphs [0046]-[0056] | 1-14 |
| P, X | JP 2023-131119 A (TAIHEIYO CEMENT CORPORATION) 22 September 2023<br>(2023-09-22)<br>paragraphs [0038]-[0063] | 1, 4-6, 9-10, 13-14 |
| P, A | | 2-3, 7-8, 11-12 |

☐ Further documents are listed in the continuation of Box C.        ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **24 April 2024** | **14 May 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/009831**

| Patent document cited in search report | | | Publication date (day/month/year) | Patent family member(s) | Publication date (day/month/year) |
|---|---|---|---|---|---|
| JP | 2003-128450 | A | 08 May 2003 | (Family: none) | |
| JP | 3-265549 | A | 26 November 1991 | US 5122191 A whole document, whole drawing | |
| JP | 2001-302296 | A | 31 October 2001 | (Family: none) | |
| JP | 2023-127724 | A | 14 September 2023 | (Family: none) | |
| JP | 2023-131119 | A | 22 September 2023 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KAREN SCRIVENER et al.** Calcined clay limestone cements (LC3). *Cement and Concrete Research*, 2018, vol. 114, 49-56